# EUROPÄISCHE PATENTSCHRIFT

(11) **EP 1 727 999 B1**
(45) Veröffentlichungstag und Bekanntmachung des Hinweises auf die Patenterteilung: **10.09.2008**
(21) Anmeldenummer: 05716267.9
(22) Anmeldetag: 22.03.2005
(51) Int. Cl.: F16D 13/68, F16B 21/18

(54) **LAMELLENTRÄGER MIT SPRENGRING**
DISK CARRIER COMPRISING A SNAP RING
PORTE-DISQUES POURVU D'UN CIRCLIP

(30) Priorität: 23.03.2004 DE 102004014112
(43) Veröffentlichungstag der Anmeldung: 06.12.2006
(73) Patentinhaber: ZF FRIEDRICHSHAFEN AG, 88038 Friedrichshafen (DE)
(72) Erfinder: BAUKNECHT, Gert, 88048 Friedrichshafen (DE)
(86) Internationale Anmeldenummer: PCT/EP2005/002998
(87) Internationale Veröffentlichungsnummer: WO 2005/093274

(56) Entgegenhaltungen:
- US-A- 2 968 503
- US-A- 4 184 242
- US-A- 6 058 591

## Beschreibung

Die Erfindung betrifft einen Lamellenträger nach dem Oberbegriff des Patentanspruches 1. Ein solcher Lamellenträger ist aus US-A-6058591 bekannt.

Sprengringe oder Sicherungsringe sind bekannt als genormte Bauteile, (Normteile), welche der axialen Fixierung von zwei Bauteilen dienen, wobei der Sprengring in einer Nut aufgrund seiner Federspannung gehalten ist und sich gegen das zu fixierende Bauteil abstützt. Bei extremen Belastungen wie hohen Drehzahlen, starken Anpresskräften und Schwingungsbeanspruchung reicht die Federspannung des Sprengringes nicht mehr aus, um ihn in seiner Nut zu halten - vielmehr neigt der Sprengring unter derartigen Belastungen zum Wandern und kann dabei aus der Nut austreten. Es wurden daher verschiedene Vorschläge bekannt, um ein solches Austreten eines Sprengringes aus seiner Nut zu verhindern.

In der DE-A 25 08 677 der Anmelderin ist ein zweiter Sprengring vorgesehen, der radial außerhalb des ersten zu dessen Sicherung angeordnet ist. Diese Maßnahme erfordert einen zusätzlichen Sprengring und einen entsprechenden radialen Bauraum, der insbesondere bei kompakt bauenden Getrieben nicht immer zur Verfügung steht.

In der älteren Patentanmeldung der Anmelderin mit dem Aktenzeichen 103 02 075.6 ist eine Sprengringsicherung, insbesondere für Lamellenträger eines Getriebes beschrieben, bei welcher die Stoßenden eines Sprengringes an ihrer radialen Aus- oder Einwärtsbewegung durch Anordnung von Rampen gehindert sind. Eine Bewegung des Sprengringes in Umfangrichtung ist durch einen Noppen zwischen den Stoßenden blockiert. Diese Sicherung erfordert ein Einfädeln des Sprengringes bei der Montage, was zusätzliche Montagezeit erfordert.

Es ist Aufgabe der vorliegenden Erfindung, einen Lamellenträger der eingangs genannten Art, d. h. mit Sprengring in einer Nut dahingehend zu verbessern, dass die Sicherung des Sprengringes sowohl hinsichtlich der Herstellung als auch der Montage vereinfacht wird.

Die Lösung dieser Aufgabe ergibt sich aus den Merkmalen des Patentanspruches 1. Erfindungsgemäß ist die Nut schräg eingeschnitten und weist parallele Nutflanken auf, wobei die den Sprengring abstützende Nutflanke einen Hinterschnitt mit einem Neigungswinkel α aufweist. Der Sprengring ist konisch und weist einen Neigungswinkel β auf, wobei β ≥ α ist. Bei axialer Belastung des Sprengringes in Richtung auf die hinterschnittene Nutflanke ist der Sprengring durch Formschluss am Austreten aus der Nut gehindert und damit gesichert. Damit wird der Vorteil einer einfachen Sprengringsicherung ohne zusätzliche Teile und ohne zusätzlichen Montageaufwand erreicht. Dadurch, dass der Neigungswinkel β des Sprengringes eher größer als der Neigungswinkel α der Nutflanke ausgebildet ist, wird der Vorteil erreicht, dass der Kraftangriffspunkt F (Resultierende) in Richtung Nutgrund wandert, also an die breiteste Stelle des Sprengringes, womit Biegespannungen, insbesondere in dem äußeren, dem Lamellenpaket abgewandten Bereich des Lamellenträgers erheblich reduziert werden. Damit kann dieser über den Sprengring nach außen vorstehende Bereich des Lamellenträgers (so genannter Kronenbereich) kürzer ausgebildet werden, was insbesondere bei kompakt bauenden Automatgetrieben für Kraftfahrzeuge von Vorteil ist. Die erfindungsgemäße Herstellung der Nut in dem Blechprofil des Lamellenträgers erfolgt durch Stanzen. Die Schneidmesser bzw. Stempel, die den Stanzvorgang ausführen, sind auf einer schiefen Ebene, deren Neigung dem Neigungswinkel α entspricht, geführt, woraus sich die parallel verlaufenden Scherkanten bzw. Nutflanken ergeben. Die erfindungsgemäß hinterschnittene Nut wird somit spanlos hergestellt, was die Fertigung vereinfacht und verbilligt.

Die erfindungsgemäß hinterschnittene Nutflanke in Verbindung mit dem konischen Sprengring kann sowohl für äußere Lamellenträger mit einem Innenprofil als auch für innere Lamellenträger mit einem Außenprofil eingesetzt werden, wobei allerdings unterschiedliche konische Sprengringe zu verwenden sind. Bei Innenprofilen verjüngt sich der Sprengring vom Außen- zum Innendurchmesser, und bei Außenprofilen verjüngt er sich vom Innen- zum Aussendruchmesser.

In weiterer vorteilhafter Ausgestaltung der Erfindung beträgt der Neigungswinkel α der Nutflanke vorzugsweise 2 Grad, womit bereits ein hinreichender Formschluss, d. h. eine Sicherungswirkung erzielt wird.

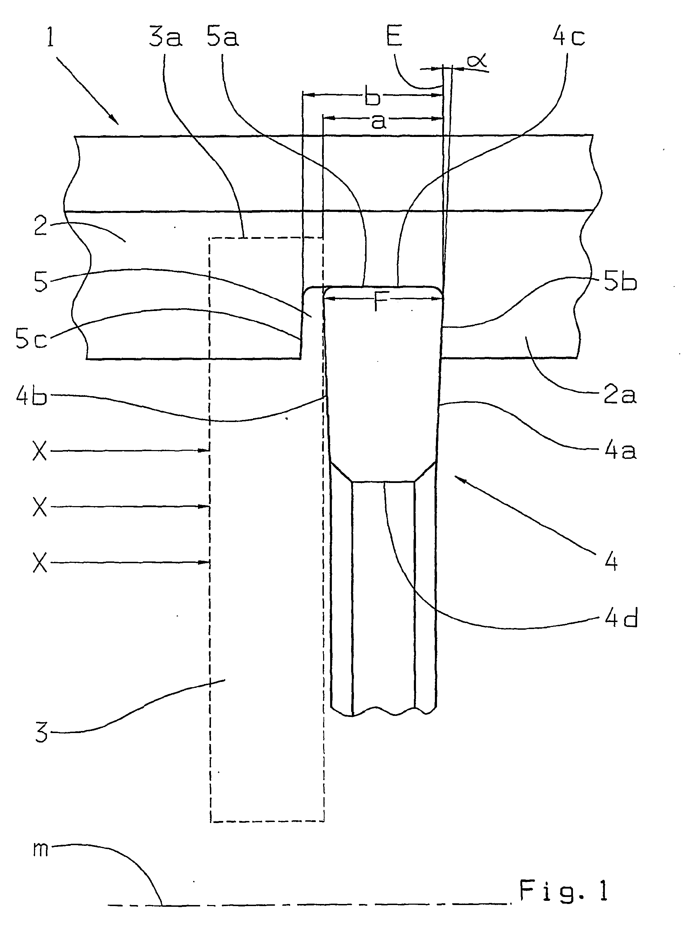

Ein Ausführungsbeispiel der Erfindung ist in der Zeichnung dargestellt und wird im Folgenden näher erläutert.

Die (einzige) Figur zeigt einen vergrößerten Ausschnitt eines äußeren Lamellenträgers 1 eines nicht dargestellten Schaltelementes eines Automatgetriebes für Kraftfahrzeuge. Derartige Lamellenträger sind bekannt, z. B. aus der oben erwähnten älteren Patentanmeldung der Anmelderin mit dem amtlichen Aktenzeichen 103 02 075.6. Ein Schaltelement umfasst in der Regel äußere Lamellenträger, die ein Innenprofil zur Mitnahme eines Außenprofils von Außenlamellen, aufweisen, und innere Lamellenträger mit einem Außenprofil zur Mitnahme eines Innenprofils von Innenlamellen. Die Lamellenträger sind topfförmig bzw. zylindrisch ausgebildet und werden aus Stahlblech hergestellt, wobei das Mitnahmeprofil eingewalzt oder eingerollt wird. Insofern wird der Lamellenträger durch spanlose Umformung hergestellt. Der teilweise dargestellte Lamellenträger 1 ist ein äußerer Lamellenträger mit einer Rotationsachse m (versetzt dargestellt) und mit einem Innenprofil 2, welches in axialer Richtung verlaufende, im Querschnitt etwa trapezförmig ausgebildete Zähne und Zahnlücken aufweist. In dieses Innenprofil 2 greift eine Außenverzahnung eines Lamellenpaketes ein, von welchem in der Zeichnung nur die äußerste Lamelle 3 gestrichelt dargestellt ist, die auch als Druckscheibe ausgebildet sein kann. Die Lamelle bzw. Druckscheibe 3 weist eine Außenverzahnung 3a auf, welche in das Mitnahmeprofil 2 eingreift. Die Außenlamelle bzw. Druckscheibe 3 ist durch das vorgespannte nicht dargestellte Lamellenpaket in Richtung der Pfeile X belastet und stützt sich gegen einen Sprengring 4 ab, welcher in einer Ringnut 5 gehalten ist. Die Ringnut weist einen parallel zur Achse m des Lamellenträgers 1 angeordneten Nutgrund 5a und zwei Nutflanken 5b, 5c auf. Die in der Zeichnung rechts angeordnete Nutflanke 5b ist geneigt und weist einen Neigungswinkel α von beispielsweise 2 Grad auf, d. h. die Nutflanke 5b ist hinterschnitten. Der Neigungswinkel α ist auf eine Radialebene E als Referenzebene bezogen. Die in der Zeichnung links liegende Flanke 5c verläuft parallel zur rechten Flanke 5b, ist also nicht hinterschnitten. Die Nut 5 wird durch nicht dargestellte Schneidmesser durch eine Radialbewegung nach außen in Richtung einer unter dem Winkel α geneigten schiefen Ebene durch Stanzen hergestellt. Daher verlaufen die beiden Nutflanken, entsprechend der Bewegungsrichtung des Stanzwerkzeuges, parallel zueinander. Die Herstellung der Nut 5 erfolgt somit spanlos, da das Material des Lamellenträgers 1 lediglich geschert und - ohne Materialabfall - nach außen verdrängt wird. Der Sprengring 4 weist zwei Stirnflächen 4a, 4b auf, welche konisch zueinander verlaufen, d. h. sich von ihrem Außendurchmesser 4 c in Richtung ihres Innendurchmessers 4d verjüngen. Die Stirnflächen 4a, 4b weisen einen Neigungswinkel β auf, der gleich oder größer als der Neigungswinkel α der Nutflanke 5b ist. Auch der Neigungswinkel β ist auf die Radialebene E bezogen. Somit verläuft die Stirnfläche 4a entweder parallel oder im spitzen Winkel zur Nutflanke 5b, was durch eine gestricheft dargestellte Stirnfläche 4a' und den Winkel β' > α angedeutet ist. Die Abstützkraft, die von der Außenlamelle bzw. Druckscheibe 3 in den Lamellenträger 1 bzw. das Mitnahmeprofil 2 eingeleitet ist, ist durch zwei Pfeile F dargestellt. Aufgrund der gegenseitigen Abstimmung der Neigungswinkel α, β ist die Resultierende F in die Nähe des Nutgrundes 5a gewandert, d. h. die Abstützkraft F wird praktisch ohne Erzeugung von Biegemomenten in den äußeren Bereich 2a des Innenprofiles 2 eingeleitet. Dies ist insbesondere dann sichergestellt, wenn der Neigungswinkel β größer als der Neigungswinkel α ist. Der außerhalb des Lamellenpaketes und Sprengringes liegende Bereich des Lamellenträgers 1, auch als Kronenbereich bezeichnet, wird somit praktisch nur noch auf Zug beansprucht, was eine wesentlich günstigere Beanspruchung bedeutet. Der Kronenbereich 2a kann daher kleiner und somit raumsparender gestaltet werden.

Die Sicherungswirkung des erfindungsgemäßen Sprengringes 4 wird durch die Konizität des Sprengringes 4 in Verbindung mit der hinterschnittenen Nutflanke 5b erreicht, welche in Verbindung mit der Anpressung durch die Außenlamelle 3 einen Formschluss bilden, der eine radiale Einwärtsbewegung des Sprengringes 4, d. h. ein Austreten aus der Nut 5 verhindert. Die zeichnerische Darstellung zeigt - wie erwähnt - einen äußeren Lamellenträger mit Innenprofil und einen Sprengring, dessen Querschnitt sich von seinem Außenzum Innendruchmesser verjüngt. Die Erfindung ist jedoch auch mit demselben Effekt und denselben Vorteilen für einen inneren Lamellenträger mit einem Außenprofil anwendbar, wobei die Nut im Außenprofil die gleiche Geometrie wie bei dem dargestellten Innenprofil hätte. Der Sprengring allerdings, welcher in die Nut eines Außenprofiles einzusetzen ist, muss eine entgegengesetzte Konizität aufweisen, d. h. er muss sich in seinem Querschnitt vom Außendurchmesser zum Innendurchmesser vergrößern - der Innendurchmesser liegt auf dem Nutgrund auf. Man kann sich dies leicht vorstellen, indem man die Zeichnung "auf den Kopf stellt", d. h. um 180 Grad dreht, wobei lediglich die umlaufenden Kanten des Sprengringes wegzudenken sind.

Die Erfindung wurde für einen Lamellenträger, d. h. ein etwa topfförmig ausgebildetes, aus Stahlblech spanlos hergestelltes, profiliertes Bauteil beschrieben. Dabei ist auch die Sprengringnut spanlos, d. h. durch Stanzen in einer zur Rotationsachse nicht senkrechten Richtung hergestellt.

### Bezugszeichen

- 1: Lamellenträger
- 2: Mitnahmeprofil
- 2a: Kronenbereich
- 3: Außenlamelle
- 3a: Außenverzahnung
- 4: Sprengring
- 4a: Stirnfläche, konisch
- 4a': Stirnfläche, konisch
- 4b: Stirnfläche, konisch
- 4c: Außendurchmesser
- 4d: Innendurchmesser
- 5: Nut
- 5a: Nutgrund
- 5b: Nutflanke, hinterschnitten
- 5c: Nutflanke
- a: Breite (Sprengring 4)
- b: Breite (Nut 5)
- m: Rotationsachse
- E: Radialebene
- α: Neigungswinkel Nutflanke
- β: Neigungswinkel Stirnfläche Sprengring
- β': Neigungswinkel Stirnfläche Sprengring

## Patentansprüche

1. Lamellenträger (1) mit einem Mitnahmeprofil (2) zur Aufnahme eines Lamellenpaketes (3), welches durch einen in eine Nut (5) eingesetzten Sprengring (4) axial fixierbar ist, wobei das Mitnahmeprofil (2) sowie die Nut (5) durch spanlose Umformung herstellbar sind und die Nut (5) einen Nutgrund (5a) und zwei Nutflanken (5b, 5c) und der Sprengring (4) zwei Stirnflächen (4a, 4b) aufweist, **dadurch gekennzeichnet,**
- **dass** die den Sprengring (4) abstützende Nutflanke (5b) einen Hinterschnitt mit einem Neigungswinkel α aufweist,
- **dass** beide Nutflanken (5b, 5c) parallel zueinander angeordnet sind,
- **dass** die Nut (5) durch Stanzen mit einem Stempel herstellbar ist, welcher auf einer schiefen, um den Neigungswinkel α gegenüber einer Radialebene E geneigten Ebene radial geführt ist,
- **dass** die Stirnflächen (4a, 4b) des Sprengringes konisch ausgebildet sind, und einen Neigungswinkel β aufweisen, wobei β ≥ α und die maximale Breite a des Sprengringes (4) im Bereich des Nutgrundes (5a) angeordnet ist.

2. Lamellenträger nach Anspruch 1, **dadurch gekennzeichnet, dass** er als äußerer Lamellenträger (1) und das Mitnahmeprofil als Innenprofil (2) ausgebildet sind.

3. Lamellenträger nach Anspruch 1, **dadurch gekennzeichnet, dass** er als innerer Lamellenträger und das Mitnahmeprofil als Außenprofil ausgebildet sind.

4. Lamellenträger nach Anspruch 1, 2 oder 3, **dadurch gekennzeichnet, dass** die Neigungswinkel α, β jeweils auf eine Radialebene E bezogen sind, und dass der Neigungswinkel α vorzugsweise 2 Grad beträgt.

## Claims

1. Disk carrier (1) with a driving spline (2) for the support of a disk set (3) which can be axially fixed by means of a circlip (4) inserted into a groove (5), with the driving spline (2) as well as the groove (5) being manufacturable by means of noncutting metal working, and with the groove (5) featuring a groove base (5a) and two groove sides (5b, 5c), and with the circlip (4) featuring two end faces (4a, 4b),
**characterized in that**
- the groove side (5b) supporting the circlip (4) features an undercut with an inclination angle α;
- both groove sides (5b, 5c) are arranged parallel to each other;
- the groove (5) is manufacturable by means of punch forming with a punch which is radially guided on an inclined plane with an inclination angle α relative to a radial plane E; and
- the end faces (4a, 4b) of the circlip are conical and have an inclination angle, with β≥ α and the maximum width α of the circlip (4) being arranged in the area of the groove base (5a).

2. Disk carrier according to claim 1, **characterized in that** it is designed as an external disk carrier (1) and the driving spline (2) is designed as an internal spline (2).

3. Disk carrier according to claim 1, **characterized in that** it is designed as an internal disk carrier and the driving spline is designed as an external spline.

4. Disk carrier according to claim 1, 2 or 3, **characterized in that** each inclination angle (α, β) is specific to a radial plane E, and that the inclination angle α is preferably 2 degrees.

## Revendications

1. Porte-disques (1) avec un profil d'entraînement (2) pour le logement d'un paquet de disques (3), celui-ci pouvant être fixé axialement par un circlip (4) monté dans une rainure (5), sachant que le profil d'entraînement (2) ainsi que la rainure (5) peuvent être réalisés sans enlèvement de copeaux et que la rainure (5) comporte une fond de rainure (5a) et deux flancs de rainure (5b, 5c) et que le circlip (4) comporte deux faces frontales (4a, 4b), **caractérisé en ce**
- **que** le flanc de rainure (5b) supportant le circlip (4) comporte une contre-dépouille avec un angle d'inclinaison α,
- **que** les deux flancs de rainure (5b, 5c) sont disposés parallèlement l'un par rapport à l'autre,
**que** la rainure (5) peut être réalisée par estampage à l'aide d'un poinçon, celui-ci étant guidé radialement sur un plan incliné de l'angle d'inclinaison α par rapport à un plan radial E,
- **que** les faces frontales (4a, 4b) du circlip sont réalisées coniquement, et comportent une angle d'inclinaison, sachant que β ≥ α et la largeur maximale α du circlip (4) est disposée dans la zone du fond de la rainure (5a).

2. Porte-disques selon la revendication 1, **caractérisé en ce qu'**il est réalité comme porte-disques extérieur (1) et **en ce que** le profil d'entraînement est réalisé comme profil intérieur (2).

3. Porte-disques selon la revendication 1, **caractérisé en ce qu'**il est réalisé comme porte-disques intérieur et **en ce que** le profil d'entraînement est réalité comme profil extérieur.

4. Porte-disques selon la revendication 1, 2 ou 3, **caractérisé en ce que** les angles d'inclinaison α, β se réfèrent respectivement sur un plan radial E, et **en ce que** l'angle d'inclinaison α est de préférence de deux degrés.
